(19) Europäisches Patentamt
European Patent Office
Office européen des brevets

(11) Publication number: **0 106 528**
**B1**

(12) # EUROPEAN PATENT SPECIFICATION

(45) Date of publication of patent specification: **07.01.87**

(51) Int. Cl.$^4$: **C 09 K 7/06**

(21) Application number: **83305335.8**

(22) Date of filing: **13.09.83**

(54) **Drilling fluids based on sulfonated thermoplastic polymers having improved low temperature rheological properties.**

(30) Priority: **13.09.82 US 416935**

(43) Date of publication of application:
**25.04.84 Bulletin 84/17**

(45) Publication of the grant of the patent:
**07.01.87 Bulletin 87/02**

(84) Designated Contracting States:
**BE DE FR GB**

(58) References cited:
**EP-A-0 072 244**
**EP-A-0 072 245**
**US-A-2 650 905**

(73) Proprietor: **Exxon Research and Engineering Company**
**P.O.Box 390 180 Park Avenue**
**Florham Park New Jersey 07932 (US)**

(72) Inventor: **Lundberg, Robert Dean**
**4 Brian Drive**
**Bridgewater New Jersey 08807 (US)**
Inventor: **Peiffer, Dennis George**
**R.D. 2, 33 John Drive**
**Annandale, New Jersey 08801 (US)**
Inventor: **Turner, Sam Richard**
**132 Surrey Hill Way**
**Rochester, New York 14623 (US)**
Inventor: **Walker, Thad Oscar**
**1311 St. Andrew's**
**Humble, Texas 77339 (US)**

(74) Representative: **Field, Roger Norton et al**
**ESSO Engineering (Europe) Ltd.**
**Patents & Licences**
**Apex Tower High Street**
**New Malden Surrey KT3 4DJ (GB)**

**EP 0 106 528 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**Description**

The present invention concerns a new class of viscosification agents for oil-based drilling muds which are used during operation of gas and oil wells as fluids for maintaining pressure, cooling drill bits and lifting cuttings from the holes in the drilling operation, wherein these viscosification agents are latices of certain neutralised sulphonated thermoplastic polymers.

EP 0072245A discloses an oil-based drilling mud based on an organic liquid, water, an emulsifier, a wetting agent, a weighting material and a neutralised sulphonated thermoplastic polymer. U.S 2650905 discloses a drilling mud which is oil or water based and which also contains a specified sulphonate of a polymer of styrene which can be in the form of an alkali metal salt or a polyhydric alcohol ester thereof.

The oil-based drilling muds of the present invention minimally comprise (but can also include other additives): an organic liquid such as an oil, fresh water or salt water, an emulsifier, a wetting agent, a weighting material and a latex of a neutralised sulphonate-containing styrene polymer having 5 to 100 meq of sulphonate groups per 100 g of the neutralised sulphonated polymer-containing styrene thermoplastic polymer. The amount of weighting material is sufficient for the drilling mud to have a specific gravity of 7 pounds per gallon to 20 pounds per gallon, (0.7 to 2 kg/l), more preferably 10 to 16 (1 to 1.6 kg/l) and most preferably 12 to 16 (1.2 to 1.6 kg/l). A typical oil-based drilling mud, as envisaged by the present invention, comprises: an oil, 1 to 10 parts by weight of water per 100 parts by weight of the oil, more preferably 3 to 5 parts by weight; and 20 to 50 lb/bbl. (0.057 to 0.143 kg/l) of an emulsifier with or without a supplementary emulsifier; 1/2 to 5 lb/bbl (0.0014 to 0.014 kg/l) of a wetting agent, and weighting material (barium sulphate or barite) necessary to give the desired mud density; which comprises less than 800 lb/bbl (2.28 kg/l) of barium sulphate, more preferably 5 to 750 (0.014 to 2.14 kg/l) and most preferably 10 to 700 (0.028 to 2.0 kg/l); and 0.5 to 20 lb/bbl (0.0014 to 0.057 kg/l) of a latex of sulphonate-containing styrene thermoplastic polymer, wherein the latex contains 20 to 50 weight percent of the neutralised sulphonate-containing styrene polymer.

The organic liquid employed in the drilling mud includes oils, for example, a No. 2 diesel fuel, but it can be other commercially available hydrocarbon solvents such as kerosene, fuel oils or selected crude. If crudes are used, they should be weathered and must be free of emulsion breakers.

Typical examples of suitable emulsifiers which can be readily employed are magnesium or calcium soaps of fatty acids.

A typical example of a suitable wetting agent which can be readily employed is an alkaryl sulphonate.

Typical examples of a weighting material which can be readily employed are barite or a barium sulfate which may optionally be surface-treated with other cations, such as calcium.

The latex of the neutralized sulfonate-containing polymers may be formed by a free radical copolymerization process. The monomer used in the free radical emulsion copolymerization process is styrene monomer, which is copolymerized with sulfonate-containing styrene monomer.

In general, the styrene and sulfonate-containing styrene monomers are dispersed in a water phase in the presence of an initiator and a suitable surfactant, wherein the temperature is sufficient to initiate polymerization. The resultant latex is added to the drilling mud formulation at 0.5 to 20 lb/bbl (0.0014 to 0.057 kg/l), wherein the latex contains 20 to 50 weight percent of the sulfonate-containing styrene polymer.

The sulfonate-containing polymers formed from the free radical emulsion copolymerization process can be generally described as having an $\overline{M}_n$ of 5,000 to 200,000, more preferably 10,000 to 100,000. The sulfonate-containing polymers of the present invention generally contain 18 to 100 meq. of sulfonate groups per 100 grams of polymer, preferably 18 to 90, and more preferably 20 to 80. An example of the sulphonate-containing polymer which is formed by the free radical emulsion copolymerization process is styrene/sodium styrene sulfonate copolymer.

The sulfonate-containing monomers which are water soluble can be generally described as a monomer having unsaturation and a metal or amine sulfonate group. The metal or amine neutralised sulphonate monomer is characterised by the formula:

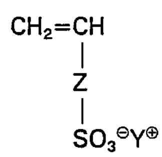

wherein Z is $C_6H_4$, and $Y^{\oplus}$ is a cation selected from Groups IA, IIA, IB and IIB of the Periodic Table or an amine of the formula:

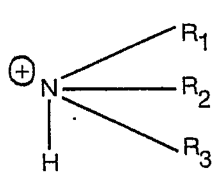

where $R_1$, $R_2$ and $R_3$ can be aliphatic groups of $C_1$ to $C_{12}$ or hydrogen. Particularly suitable metal cations are sodium, potassium and zinc, and an especially preferred metal cation is sodium. A typical example of suitable sulfonate-containing monomer is:

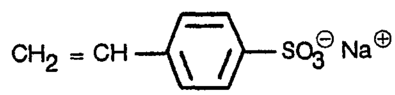

sodium styrene sulfonate.

An especially preferred sulfonate-containing monomer is metal styrene sulfonate. The molar ratio of sulfonate-containing monomer to styrene monomer is 1/200 to 1/5, more preferably 1/150 to 1/6 and most preferably about 1/100 to 1/9.

The redox emulsion polymerization recipe used to make the polymers is effective in initiating the copolymerization of water insoluble and water soluble comonomers in an emulsion system.

A variety of free radical catalysts can be employed including the water soluble varieties, potassium persulfate, ammonium persulfate, etc., and the oil/water soluble redox systems such as benzoyl peroxide/$(NH_4)_2FeSO_4$, etc.

The surfactants employed to make the polymers are varied and well-known in the art. The typical emulsifiers or surfactants can be employed; however, some are more effective than others in generating latices of better stability. A preferred emulsifier is sodium lauryl sulfate.

The buffering agents, if used, in the polymerization process are selected from sodium carbonate, ammonia, sodium acetate, trisodium phosphate etc. These buffering agents are employed at a concentration of 0.1 to 5 grams per 100 grams water employed in the emulsion system.

Chain transfer agents can be readily employed in the polymerization process for controlling the molecular weight of the resultant copolymer. The concentration of chain transfer agent is from 0 to about 1.0 grams per 100 grams of the combined weight of the sulfonate-containing monomer and the conjugated diene.

The free radical emulsion copolymerization of the water soluble sulfonate-containing polymer and the styrene monomer yields a stable latex, wherein the resultant water insoluble sulfonate-containing copolymer is not covalently cross-linked and possesses substantial ionic cross-linking, and has 18 to 100 meq. of sulfonate groups per 100 grams of polymer, more preferably 18 to 90.

Example 1

The copolymer emulsions which were used in the drilling mud formulations are prepared by emulsion techniques that allow incorporation of sodium sulfonate styrene monomer into styrene to form the sulfonate-containing copolymer. A glass pressure bottle was charged with 50 ml. of deaerated water, 25.0 g. of styrene, 1.0 g. of NaSS, 1.6 g. of sodium lauryl sulfate, 0.1 g. of potassium persulfate and 0.1 g. of dodecyl thiol as a chain transfer agent to control molecular weight. The bottle was flushed with nitrogen, capped and then was shaken at 50°C in a thermostatted water bath for six hours. The resulting stable emulsion was short stopped with hydroquinone and cooled to room temperature. This emulsion was either used directly in the drilling fluid formulation or the polymer was coagulated and isolated utilizing methanol and sodium chloride. The white solid copolymer isolated after water washing (to remove emulsifier) was dried to a white powder with a sulfur content of 0.65% which is equivalent to 2.05 mol% NaSS in the copolymer. This dry powder was also utilized in the drilling mud formulation in order to compare drilling mud formulations made from both the powdered form of the sulfonate-containing styrene polymer and those made from the corresponding latex of the sulfonate-containing styrene polymer.

Example 2

Oil-based drilling muds were prepared using standard laboratory techniques. A typical mud was prepared by mixing 205.82 g. of No. 2 diesel oil, 34.76 g. Oil Faze (Magcobar), 1.5 g. SE11 and 1.5 g. DV33 (Magcobar). (Oilfaze is a blend of asphalts, surfactants and organic soaps. SE11 is a liquid blend of emulsifier and wetting agent. DV-33 is a liquid organic surfactant.) To this mixture was added 10 g. of $CaCl_2$ in 21 ml. of water. The mud was weighted with 226.35 g. of Barite and then 4.4 g. of additional $CaCl_2$ were added. The sodium salt of the sulfonated styrene (1.99 mol% sulfonate units) was added at 2 lb/bbl. as either the emulsion or as the precipitate solid. The mud was aged overnight at 150°F to ensure chemical equilibrium. Aliquots were aged at 300°F and 400°F for 16 hours in pressurized cells. The cells were cooled to room temperature and then the rheological properties of the mud were measured on a Fann Model 35 viscometer at 115°F. The results for tests comparing emulsion verses precipitated powder are shown in Table I.

TABLE I
Comparison of SPS in Latex Form and in Precipitated Solid Form in Oil-Based Drilling Muds

| | Solid (1.99 mol% NaSS | | | Latex (1.99 mol% NaSS | | |
|---|---|---|---|---|---|---|
| | 150°C | 300°C | 400°C | 150°C | 300°C | 400°C |
| 600 rpm viscosity | 34 | 37 | 43 | 45 | 58 | 56 |
| Yield point | 0 | 0 | 3 | 7 | 8 | 6 |
| 0 gel strength | 3 | 2 | 2 | 4 | 5 | 4 |
| 10 min. gel strength | 3 | 3 | 9 | 7 | 14 | 14 |
| | Solid (1.64 mol% NaSS) | | | Latex (1.64 mol% NaSS) | | |
| 600 rpm viscosity | 37 | 39 | 58 | 44 | 51 | 73 |
| Yield point | 3 | 0 | 0 | 6 | 0 | 11 |
| 0 gel strength | 3 | 1 | 2 | 2 | 3 | 3 |
| 10 min. gel strength | 4 | 2 | 3 | 5 | 4 | 6 |

**Claims**

1. A drilling mud which comprises:
(a) an organic liquid substantially immiscible in water;
(b) 1 to 10 parts by weight of water per 100 parts by weight of the organic liquid;
(c) 20 to 50 lb/bbl. (0.057 to 0.143 kg/l) of the drilling mud of at least one emulsifier;
(d) a wetting agent;
(e) weighting material in an amount sufficient to give said drilling mud a specific gravity of 7 lb/gallon to 20 lb/gallon (0.7 to 2 kg/l); and
(f) 0.5 to 20.0 lb/bbl. (0.0014 to 0.057 kg/l) of the drilling mud (which is equivalent to 0.15 to 6 lb/bbl (0.00043 to 0.017 kg/l) solid polymer derived from the latex) of a latex neutralised sulphonate-containing styrene thermoplastic polymer, said neutralised sulphonate-containing styrene polymer having 5 to 100 meq. of sulphonate groups per 100 grams of the neutralised sulphonate-containing styrene polymer, said latex containing 20.0 to 50.0 weight percent of the neutralised sulphonate-containing styrene polymer.

2. A drilling mud according to claim 1, wherein the sulphonate groups of said neutralised sulphonate-containing styrene polymer are neutralised with a counterion selected from antimony, iron, aluminium, lead and Groups IA, IIA, IB and IIB of the Periodic Table of Elements.

3. A drilling mud according to claim 1 wherein the sulphonate groups of said neutralised sulphonate-containing styrene polymer are neutralised with sodium counterions.

4. A drilling mud according to any one of the preceding claims wherein said neutralised sulphonate-containing styrene polymer is a polymer of sodium sulphonate styrene monomer and styrene monomer.

5. A drilling mud according to any one of the preceding claims wherein said wetting agent is an alkaryl sulphonate.

6. A drilling mud according to any one of the preceding claims wherein said weighting material is barite or barium sulphate.

7. A drilling mud according to any one of the preceding claims wherein said organic liquid is an oil.

8. A drilling mud according to any one of the preceding claims wherein said emulsifier is a magnesium or calcium soap of a fatty acid.

**Patentansprüche**

1. Bohrschlamm, gekennzeichnet durch:
(a) eine organische Flüssigkeit, die im wesentlichen mit Wasser nicht mischbar ist,
(b) 1 bis 10 Gewichtsteile Wasser je 100 Gewichtsteile der organischen Flüssigkeit,
(c) 0,057 bis 0,143 kg mindestens eines Emulgiermittels je Liter Bohrschlamm,

(d) ein Benetzungsmittel,

(e) Beschwerungsmaterial in ausreichender Menge, um dem Bohrschlamm ein spezifisches Gewicht von 0,7 bis 2 kg/l zu verleihen, und

(f) 0,0014 bis 0,057 kg je Liter Bohrschlamm (was äquivalent ist zu 0,00043 bis 0,017 kg/l festem aus dem Latex abgeleiteten Polymer) eines Latex eines neutralisierten sulfonathaltigen thermoplastischen Styrolpolymeren, wobei das neutralisierte sulfonathaltige Styrolpolymer 5 bis 100 Milliäquivalente Sulfonatgruppen je 100 g des neutralisierten sulfonathaltigen Styrolpolymeren aufweist und der Latex 20,0 bis 50,0 Gew.% des neutralisierten sulfonathaltigen Styrolpolymeren enthält.

2. Bohrschlamm nach Anspruch 1, dadurch gekennzeichnet, daß die Sulfonatgruppen des neutralisierten sulfonathaltigen Styrolpolymeren mit einem Gegenion ausgewählt aus Antimon, Eisen, Aluminium, Blei und den Gruppen IA, IIA, IB und IIB des Periodischen Systems der Elemente neutralisiert sind.

3. Bohrschlamm nach Anspruch 1, dadurch gekennzeichnet, daß die Sulfonatgruppen des neutralisierten sulfonathaltigen Styrolpolymeren mit Natriumgegenionen neutralisiert sind.

4. Bohrschlamm nach einem der vorangehenden Ansprüche, dadurch gekennzeichnet, daß das neutralisierte sulfonathaltige Styrolpolymer ein Polymer von Natriumsulfonatstyrolmonomer und Styrolmonomer ist.

5. Bohrschlamm nach einem der vorangehenden Ansprüche, dadurch gekennzeichnet, daß das Benetzungsmittel ein Alkarylsulfonat ist.

6. Bohrschlamm nach einem der vorangehenden Ansprüche, dadurch gekennzeichnet, daß das Beschwerungsmaterial Baryt oder Bariumsulfat ist.

7. Bohrschlamm nach einem der vorangehenden Ansprüche, dadurch gekennzeichnet, daß die organische Flüssigkeit ein Öl ist.

8. Bohrschlamm nach einem der vorangehenden Ansprüche, dadurch gekennzeichnet, daß das Emulgiermittel eine Magnesium- oder Calciumseife einer Fettsäure ist.

**Revendications**

1. Boue de forage qui comprend:

(a) un liquide organique pratiquement immiscible à l'eau;

(b) 1 à 10 parties en poids d'eau pour 100 parties en poids du liquide organique;

(c) 20 à 50 lb/bbl (0,057 à 0,143 kg/l) par rapport à la boue de forage d'au moins un émulsifiant;

(d) un agent mouillant;

(e) un alourdissant en quantité suffisante pour donner à ladite boue de forage un poids spécifique de 7 lb/gallon à 20 lb/gallon (0,7 à 2 kg/l); et

(f) 0,5 à 20,0 lb/bbl (0,0014 à 0,057 kg/l) par rapport à la boue de forage (ce qui est équivalent à 0,15 à 6 lb/bbl (0,00043 à 0,017 kg/l) de polymère solide dérivé du latex) d'un latex d'un polymère thermoplastique styrène contenant des groupes sulfonates neutralisés, ce polymère de styrène contenant des groupes sulfonates neutralisés ayant 5 à 100 meq. de groupes sulfonate pour 100 g de polymère de styrène contenant des groupes sulfonates neutralisés, le latex contenant 20,0 à 50,0% en poids du polymère de styrène contenant des groupes sulfonates neutralisés.

2. Boue de forage selon la revendication 1, dans laquelle les groupes sulfonates du polymère de styrène contenant des groupes sulfonates neutralisés sont neutralisés par un ion antagoniste choisi parmi l'antimoine, le fer, l'aluminium, le plomb et les éléments des groupes IA, IIA, IB et IIB de la Classification Périodique des Eléments.

3. Boue de forage selon la revendication 1, dans laquelle les groupes sulfonates dudit polymère de styrène comprenant des groupes sulfonates neutralisés sont neutralisés avec des ions antagonistes sodium.

4. Boue de forage selon l'une quelconque des revendications précédentes, dans laquelle le polymère de styrène comprenant des groupes sulfonate neutralisé est un polymère du monomère styrène sulfonate de sodium et du monomère styrène.

5. Boue de forage selon l'une quelconque des revendications précédentes, dans laquelle l'agent mouillant est un alkaryl sulfonate.

6. Boue de forage selon l'une quelconque des revendications précédentes, dans laquelle l'alourdissant est de la barytine ou du sulfate de baryum.

7. Boue de forage selon l'une quelconque des revendications précédentes, dans laquelle ledit liquide organique est une huile.

18. Boue de forage selon l'une quelconque des revendications précédentes, dans laquelle ledit émulsifiant est un savon de magnésium ou de calcium d'un acide gras.